Europäisches Patentamt

(19) European Patent Office

Office européen des brevets

(11) Numéro de publication: **0 037 792**

**A1**

(12) # DEMANDE DE BREVET EUROPEEN

(21) Numéro de dépôt: **81630017.2**

(22) Date de dépôt: **18.02.81**

(51) Int. Cl.³: **G 01 F 23/26**
**C 21 C 5/30**

(30) Priorité: **25.03.80 LU 82301**

(43) Date de publication de la demande:
**14.10.81 Bulletin 81/41**

(84) Etats contractants désignés:
**AT BE DE GB IT SE**

(71) Demandeur: **ARBED S.A.**
**Avenue de la Liberté**
**L-2930 Luxembourg(LU)**

(72) Inventeur: **Baumert, Jean**
**10 rue Général Patton**
**L-4277 Esch/Alzette(LU)**

(74) Mandataire: **Neyen, René**
**Administration Centrale de l'Arbed Case postale 1802**
**L-2930 Luxembourg(LU)**

(54) **Système de mesure du niveau de la scorie dans un creuset métallurgique au cours de l'affinage de la fonte brute.**

(57) Un système de mesure de la hauteur du niveau de la scorie au cours de l'affinage de la fonte met en oeuvre un oscillateur électrique. Le bloc oscillateur (2) est monté à la face latérale extérieure de la carcasse (3) du creuset à l'intérieur d'une enceinte (1) refroidie à l'eau. Le système électronique de traitement du signal mesuré est monté à l'écart du creuset.

On peut loger entre le garnissage permanent (4) et le réfractaire d'usure (6), soit des électrodes en guise de capacité du circuit LC de l'oscillateur, soit une spire faisant fonction de l'inductance dudit circuit.

La variation du niveau de la scorie (7) conduit dans les 2 cas à une variation de la capacité du circuit LC et par là à une variation de la fréquence de résonnance de l'oscillateur, laquelle fréquence est mesurée.

./...

EP 0 037 792 A1

Croydon Printing Company Ltd.

FIG. 1

Système de mesure du niveau de la scorie dans un creuset
métallurgique au cours de l'affinage de la fonte brute

La présente invention concerne un système de mesure du niveau
de la scorie dans un creuset métallurgique au cours de l'affinage de la fonte brute.

La connaissance du niveau de la scorie dans un convertisseur
d'aciérie est importante, tant du point de vue métallurgique,
comme paramètre du degré d'avancement de l'affinage, que du
point de vue de la sécurité, en vue de prévenir un débordement.

Ainsi le déposant a développé un système de mesure du niveau
de la scorie qui permet en même temps une évaluation de la
consistance de celle-ci, ce qui constitue une information importante, surtout pour l'affinage de fontes phosphoreuses où
une scorie d'une consistance mousseuse était jugée désirable.

Ce système de mesure que le déposant a décrit dans le brevet
luxembourgeois no 71.261, comporte un conduit acoustique thermostatisé qui est disposé au-dessus du convertisseur et qui
capte le bruit émis par la lance de soufflage d'oxygène. Après
filtrage des fréquences dont l'origine est étrangère aux paramètres qui intéressent pour la mesure proprement dite, on retient un signal dont l'interprétation permet de conclure au
degré du bruit absorbé par la scorie et par là au degré du caractère mousseux présent ainsi qu'à son niveau dans le creuset.

D'un côté, ce système de mesure où l'emplacement du capteur est
situé en-dehors du creuset, est problématique dans le cas
des installations d'affinage où le creuset peut être relié de
manière plus ou moins étanche à la cheminée p.ex. à l'aide d'une jupe mobile munie de vérins hydrauliques. Il s'agit dans ce cas d'installations d'affinage où au cours du soufflage on empêche dans la mesure du possible l'accès d'air dans la cheminée, soit pour soustraire les gaz formés au cours de l'élaboration en vue d'une utilisation comme gaz de combustion, soit pour prévenir une post-combustion du monoxyde de carbone au voisinage immédiat de la tuyauterie du système de refroidissement installé dans la cheminée.

D'un autre côté, le développement de procédés d'affinage plus élaborés, comme celui décrit dans la demande de brevet luxembourgeois no 81.207 du 30 avril 1979, qui comporte en plus du soufflage d'oxygène sur la surface du bain un barbotage du bain au moyen de gaz inerte introduit par le fond du creuset, résulte en la formation d'une scorie de consistance essentiellement non-mousseuse, si bien que le système de mesure décrit plus haut n'est plus apte à fournir des résultats facilement interprétables pour déterminer le niveau de la scorie dans le creuset.

La présence d'une scorie plus dense, due à l'effet du barbotage de gaz inerte introduit par le fond du creuset, exige par conséquent l'élaboration d'un système de mesure basé sur des paramètres de mesure autres que le degré d'absorption du bruit émis par la lance de soufflage.

Le but de l'invention consistait donc à proposer un système de mesure du niveau de la scorie, largement indépendant d'une part de la configuration de l'installation d'affinage et d'autre part du degré de moussage de la scorie et dont les performances sont du moins équivalentes à celles des systèmes connus.

Ce but est atteint par le système de mesure suivant l'invention qui est caractérisé en ce qu'il comporte essentiellement un oscillateur électrique dont le fréquence de résonnance varie en fonction de la proximité du niveau de la scorie dans le creuset, ainsi qu'un système électronique de traitement du signal mesuré.

L'oscillateur est monté à la face latérale extérieure de la carcasse du creuset, à la hauteur du niveau moyen de la scorie, dans une enceinte refroidie à l'eau, alors que le système électronique de traitement est utilement monté à distance.

Le circuit LC qui détermine la fréquence de résonnance de l'scillateur peut en principe être réalisé de deux façons :

Suivant une première forme d'exécution l'inductance "L" fait partie intégrante du bloc oscillateur, alors que la capacité est constituée par deux tôles de dimensions appropriées qui sont montées dans le creuset entre le garnissage permanent et le réfractaire d'usure. La liaison électrique avec l'inductance se fait par un passage isolé électriquement à travers la carcasse du creuset. La variation du niveau de la scorie en face des électrodes entraîne une variation de la capacité du circuit, d'où une variation de la fréquence de résonnance de l'oscillateur, laquelle constitue le signal de mesure.

Une deuxième forme d'exécution prévoit que la capacité est logée physiquement sur le bloc oscillateur, alors que l'inductance est montée dans le creuset entre le garnissage permanent et le réfractaire d'usure. Elle est constituée par une ou plusieurs spires formant, soit un cadre disposé verticalement et ayant des dimensions géométriques appropriées, soit une inductance disposée horizontalement, faisant une fois le tour du creuset, toujours entre le garnissage permanent et le réfractaire d'usure. L'effet de mesure est dû, comme dans la première forme , à la variation de la capacité du circuit LC.

Dans les deux cas la forme, la taille et la disposition du capteur proprement dit c.à.d. des éléments montés dans le creuset confèrent au signal de mesure soit le caractère d'une information à évolution continue (inductance ou électrodes ayant une forme allongée et disposée verticalement dans le sens de la plus grande dimension),soit le caractère d'une information tout-ou-rien (les mêmes éléments disposés horizontalement).

Des formes et dispositions intermédiaires permettent d'influencer l'allure de la réponse du capteur, p.ex. montage en biais.

Les conditions indispensables à la méthode décrite sont une conductivité électrique de la scorie relativement élevée par rapport à celle du réfractaire entourant les électrodes ou l'inductance et une conductivité électrique du réfractaire la plus basse possible.

Comme la conductivité électrique de la scorie est donnée, on n'a une influence que sur celle du réfractaire. Un choix approprié du matériau du réfractaire destiné à être monté à l'endroit de mesure prévoit p.ex. des briques en magnésie.

Si l'on considère qu'il est évident que la stabilité mécanique et électrique de l'oscillateur, déterminée par la construction et la qualité des composants, la stabilité de la température autour du bloc oscillateur et la stabilité de la tension d'alimentation doivent être assurées dans la mesure du possible, il reste deux influences parasites qui doivent être compensées.

Ce sont, d'une part, la variation de la conductivité électrique du réfractaire en fonction de la température et, d'autre part, l'usure progressive du réfractaire au cours de la campagne.

Les effets des parasites sur le signal de mesure final sont les suivants : L'augmentation de la température du réfractaire, à laquelle est associée une augmentation de la conductivité, entraîne une diminution de la fréquence de résonnance de base de l'oscillateur et masque en partie l'influence de la scorie mousseuse sur la capacité du circuit, dont résulte une diminution de la variation relative de la capacité, en d'autres termes une diminution de la sensibilité.

D'autre part, à la suite de l'usure du réfractaire, la distance entre l'électrode fixe (tôles ou inductance) et l'électrode mobile (scorie mousseuse) est réduite, ce dont résulte une augmentation de la variation relative de la capacité sous l'influence de la scorie, donc une augmentation de la sensibilité du système.

- 5 -                                    0037792

Les deux facteurs agissent en sens contraire sur le signal utile.

Pour ce qui est de l'évolution des influences parasites dans le temps, celles-ci peuvent être considérées comme variant lentement par rapport à la durée d'une phase d'élaboration de l'acier, d'où il suit qu'on peut renoncer à une compensation continue en faveur d'une compensation "ponctuelle" en début de chaque phase de soufflage.

La description précédente des phénomènes physiques décrits déterminent le dimensionnement de l'oscillateur et la conception du système de traitement du signal.

Le fait d'avoir une variation de la fréquence propre d'un oscillateur comme image de la grandeur à mesurer présente deux avantages:

a) La fréquence est une grandeur qui est mesurée sinon obligatoirement, alors du moins en pratique par des méthodes digitales, qui se prêtent directement comme entrées à un ordinateur. Cet ordinateur étant supposé être existant, on peut envisager une solution dans laquelle celui-ci se charge du traitement de l'information.

b) La faiblesse de l'effet de mesure auquel on doit s'attendre pose le problème de la sensibilité du système. Là encore la fréquence étant une grandeur disponible sous forme digitale permet un traitement plus subtil qu'une grandeur analogique et confère à l'ensemble une plus grande sensibilité. On mettra à profit, comme décrit plus loin, le principe du changement de fréquence.

Pour ce qui est du dimensionnement de l'oscillateur, il y a lieu de relever que la fréquence de base de l'oscillateur, dont le choix est libre en principe, est soumise aux contraintes suivantes :

En partant de l'hypothèse que cette fréquence est située dans la plage entre 5 et 10 MHz, on devra admettre une instabilité de base estimée à 1 kHz. En d'autres termes, le kHz doit être considéré comme unité de mesure, toute variation inférieure à 1 kHz n'étant pas prise en considération.

Si l'on se fixe une résolution de 1%, il faudra que la course de la fréquence propre de l'oscillateur soit au moins égale à 100 kHz. En plus, on aura intérêt à réduire à un minimum les effets contraires qu'exercent l'élévation de la température du réfractaire et l'usure de celui-ci au cours de la campagne sur l'effet de mesure, pour autant que cette contrainte est compatible avec les deux précédentes et avec les possibilités de réalisation dictées par les données géométriques du creuset, par l'épaisseur et les propriétés électriques des deux types de réfractaire.

Dans le cas d'un capteur autonome indépendant d'un ordinateur, le système de traitement comprendra essentiellement deux compteurs, dont l'un est du type compteur/décompteur qui peut être prépositionné à une valeur donnée, les mémoires nécessaires, une base de temps à cristal avec compteur et comparateur permettant un ajustement de la durée d'un cycle de mesure par pas-unité, une unité de commande des compteurs (démarrage, arrêt et mise à zéro) et de la base de temps en fonction de critères extérieurs et un convertisseur digital/analogique pour l'affichage de la valeur de mesure à l'opérateur. Une unité de mise en forme du signal final peut cependant être incluc dans le cas de l'utilisation d'un ordinateur.

Une forme d'exécution particulièrement avantageuse prévoit qu'on utilise deux oscillateurs situés à des niveaux différents et que l'on travail en différentiel; le signal de l'un des oscillateurs, mis à l'abri de l'influence de la scorie mousseuse, peut alors servir de référence à l'autre. L'électronique de traitement sera plus complexe, mais elle se composera toujours des mêmes types de composants.

Une illustration non-limitative du système de mesure suivant l'invention est fournie par la voie des dessins, où la fig. 1 représente une vue schématisée de la forme d'exécution mettant en oeuvre des électrodes en guise de capacité logée dans le réfractaire du creuset, tandis que la fig. 2 montre la forme d'exécution où l'inductance est logée dans le réfractaire. La fig. 3 représente le schéma de principe du système électronique de traitement du signal mesuré.

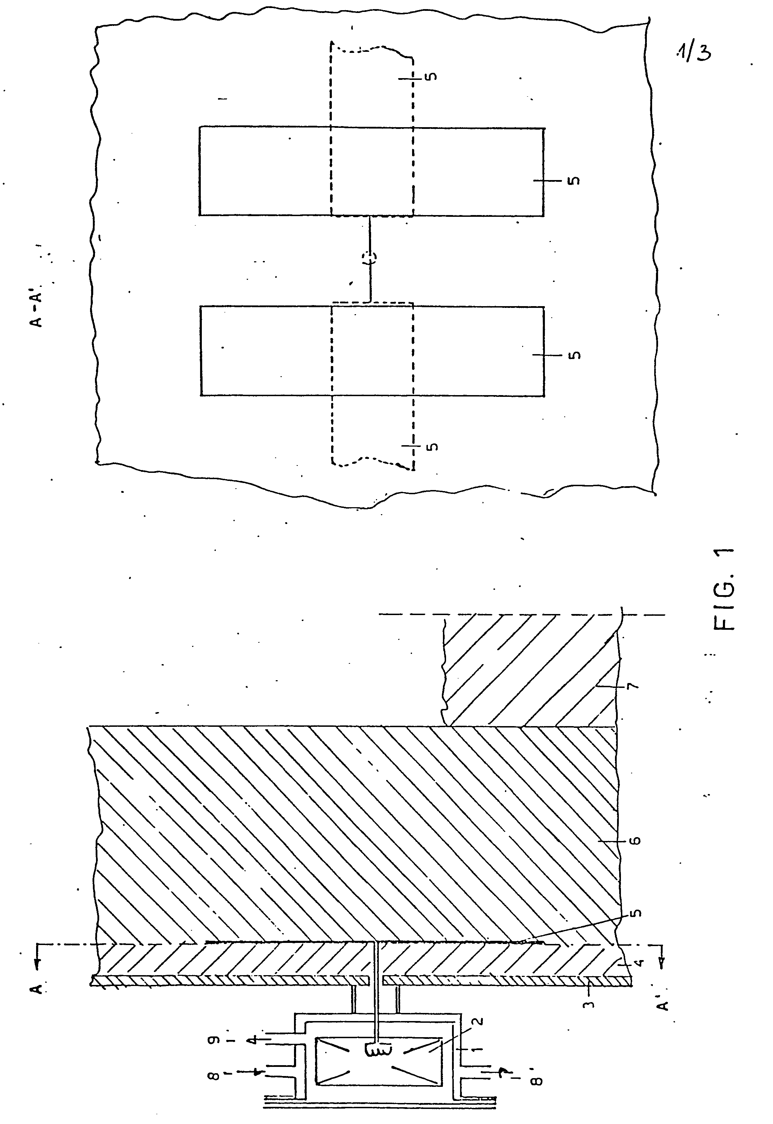

En fig. 1 on distingue l'enceinte (1) refroidie à l'eau (8,8') et montée sur la carcasse (3) du creuset. Ce bloc oscillateur (2) est relié aux électrodes (5) qui peuvent être disposées soit verticalement, soit horizontalement, soit encore en biais, ce qui n'est pas montré. La liaison entre le bloc (2) et les électrodes (5) traverse le garnissage permanent (4) du creuset. Les électrodes (5) sont logées entre le garnissage permanent (4) et le réfractaire d'usure (6). Le niveau de la scorie (7) est représenté à la hauteur des électrodes (5).

Le bloc (2) est relié au système de traitement du signal, non-représenté. A cette fin l'enceinte (1) présente un conduit (9) pour les câbles de liaison.

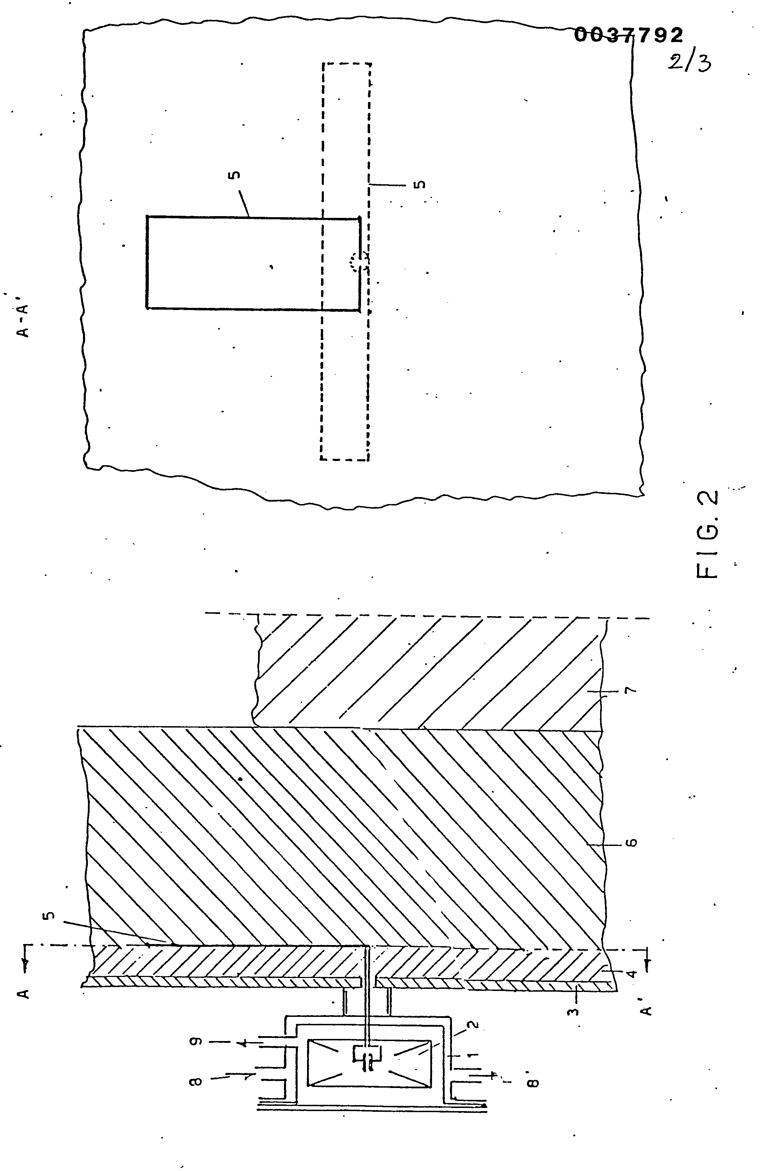

La fig. 2 montre la même enceinte (1), refroidi à l'eau (8,8'). Le bloc (2) est représenté de manière à indiquer que la capacité y est intégrée.

Dans cette forme d'exécution, une spire (5) faisant fonction d'inductance du circuit LC est logée entre le garnissage permanent (4) et la réfractaire d'usure (6). La spire (5) peut être disposée soit pour former un cadre vertical ou horizontal; la ligne pointilléesymbolise que la spire fait un tour autour du creuset.

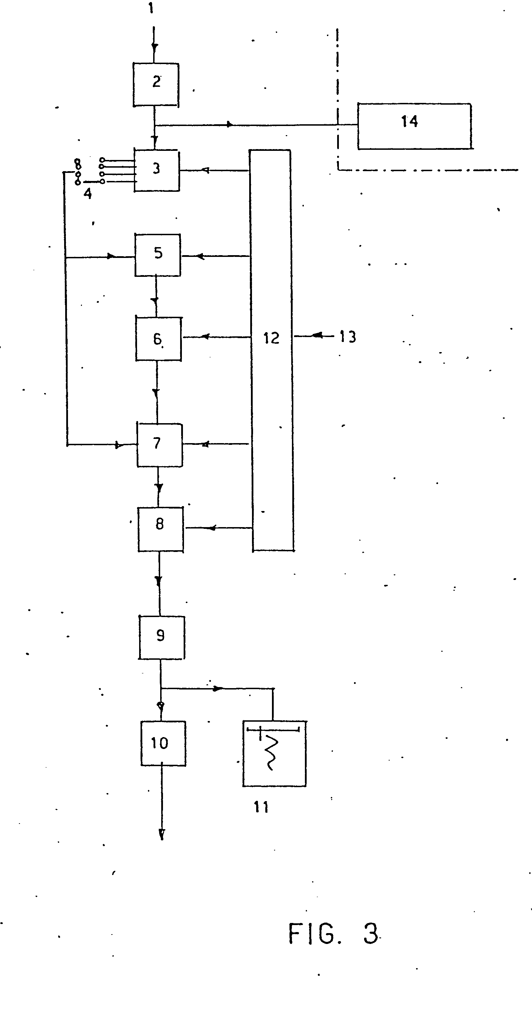

La fig. 3 montre le schéma de principe du système de traitement du signal mesuré.

Les références représentent ce qui suit :

1) Arrivée du signal "fréquence" de l'oscillateur

2) Circuit de mise en forme

3) Compteur

4) Commutateur de sélection de la plus petite unité significative

5) Compteur

6) Mémoire

7) Compteur/décompteur avec prépositionnement

8) Mémoire

9) Convertisseur digital/analogique

10) Convertisseur analogique/digital avec sortie pour ordinateur

11) Enregistreur analogique

12) Circuit de commande pour compteurs, mémoires y compris base de temps

13) Entrée de signaux (critères) extérieurs

14) Fréquencemètre de contrôle

0037792

Revendications

1. Système de mesure du niveau de la scorie dans un creuset métallurgique au cours de l'affinage de la fonte brute, caractérisé en ce qu'il comporte essentiellement un oscillateur électrique dont la fréquence de résonnance varie en fonction de la proximité du niveau de la scorie dans le creuset, ainsi qu'un système électronique de traitement du signal mesuré.

2. Système suivant la revendication 1, caractérisé en ce que le bloc oscillateur est monté à la face latérale extérieure du creuset et que le système de traitement du signal est monté à distance du creuset.

3. Système suivant les revendications 1-2, caractérisé en ce que deux électrodes sous forme de tôles métalliques allongées et qui constituent la capacité du circuit LC sont logées entre le réfractaire d'usure et le garnissage permanent du creuset et que l'inductance dudit circuit fait partie intégrante du bloc oscillateur.

4. Système suivant les revendications 1-3, caractérisé en ce que les électrodes sont disposées de manière à ce que leur axe soit situé dans le plan de l'axe du creuset.

5. Système suivant les revendications 1-3, caractérisé en ce que les électrodes sont disposées de manière à ce que leur axe soit situé en biais au plan de l'axe du creuset.

6. Système suivant les revendications 1-3, caractérisé en ce que les électrodes sont disposées de manière à ce que leur axe soit situé verticalement au plan de l'axe du creuset.

7. Système suivant les revendications 1-2, caractérisé en ce qu'au moins une spire faisant fonction d'inductance du circuit LC est logée entre le réfractaire d'usure et le garnissage permanent du creuset et que la capacité dudit circuit fait partie intégrante du bloc oscillateur.

8. Système suivant les revendications 1-2 et 7, caractérisé en ce que la spire est disposée dans le plan horizontal et fait le tour complet du creuset.

9. Système suivant les revendications 1-2 et 7 , caractérisé en ce que la spire est disposée dans le plan vertical dans le réfractaire du creuset.

10. Système suivant les revendications 1-9, caractérisé en ce que le bloc oscillateur est installé dans une chambre refroidie à l'eau qui est montée à un niveau approprié qui est utilement le niveau moyen de la scorie.

11. Système suivant les revendications 1-10, caractérisé en ce que la matériau réfractaire qui se trouve en contact direct avec les éléments constituants du circuit LC présente une conductivité électrique faible par rapport à celle de la scorie.

12. Système suivant les revendications 1-11, caractérisé en ce que le matériau réfractaire est avantageusement de la magnésie.

13. Système suivant la revendication 1, caractérisé en ce que le système de traitement du signal comprend essentiellement deux compteurs, dont l'un est du type compteur/décompteur qui peut être prépositionné à une valeur donnée, les mémoires nécessaires, une base de temps à cristal avec compteur et comparateur permettant un ajustement de la durée d'un cycle de mesure par pas-unité, une unité de commande des compteurs (démarrage, arrêt et mise à zéro) et de la base de temps en fonction de critères extérieurs et un convertisseur digital/analogique pour l'affichage de la valeur de mesure.

FIG. 1

A-A'

0037792

1/3

A - A'

FIG. 2

FIG. 3

**0037792**

Office européen
des brevets

**RAPPORT DE RECHERCHE EUROPEENNE**

Numéro de la demande

EP 81 63 0017

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| X | <u>FR - A - 2 249 169</u> (STAHLWERKE PEINE-SALZGITTER AG) <br><br> * En entier * <br><br> -- | 1-4,7, 9,11 | G 01 F 23/26 <br> C 21 C 5/30 |
| | STEEL IN THE USSR, vol. 6, no. 5, mai 1976 <br> London, GB <br> S.I. FILIPPOV et al.: "Capacitive sensing element for continuous measurement of the level of converter baths", pages 243-245 <br><br> * Page 243, colonne de gauche, ligne 9 - colonne de droite, ligne 6; page 244, colonne de gauche, ligne 20 - colonne de droite, ligne 25; figures 1,2 * <br><br> -- | 1-4,11 | |
| | <u>US - A - 3 511 580</u> (W.O. ECKHARDT et al.) <br><br> * Colonne 3, ligne 65 - colonne 4, ligne 3; figure 1 * <br><br> -- | 1,2,7, 9 | G 01 F 23/26 <br> C 21 C 5/30 |
| | <u>DE - A - 2 031 373</u> (A. BEUTTEN-MÜLLER) <br><br> * Page 1, lignes 17-24; page 5, ligne 2 - page 6, ligne 13; revendications 1,3,5,6; figures 1, 2A, 2B, 5 * <br><br> -- | 1,3,4 | |
| | <u>FR - A - 2 195 342</u> (GULL AIRBORNE INSTRUMENTS INC.) <br><br> * Page 1, lignes 1-3; page 6, ligne 1 - page 8, ligne 26; figure 2 * <br><br> ./. | 13 | |

DOMAINES TECHNIQUES RECHERCHES (Int. Cl.³)

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 30-06-1981 | NENTWICH |

OEB Form 1503.1  06.78

**Office européen des brevets**

# RAPPORT DE RECHERCHE EUROPEENNE

| Catégorie | Citation du document avec indication, en cas de besoin, des parties pertinentes | Revendication concernée | CLASSEMENT DE LA DEMANDE (Int. Cl. 3) |
|---|---|---|---|
| | **DOCUMENTS CONSIDERES COMME PERTINENTS** | | |
| | & US - A - 3 801 902 | | |
| | -- | | |
| | FR - A - 1 468 989 (G.F.R. SAMMAN) | 1,4,6 | |
| | * Page 3, colonne de gauche, ligne 32 - page 4, colonne de gauche, ligne 29; figures 1-3 * | | |
| | -- | | |
| | FR - A - 2 341 843 (VDO ADOLF SCHINDLING AG) | 6 | |
| | * Page 3, ligne 29 - page 4, ligne 15; figures * | | **DOMAINES TECHNIQUES RECHERCHES (Int. Cl. 3)** |
| | -- | | |
| A | GB - A - 1 318 512 (R. FREEDMAN) | 1-3 | |
| | * Page 2, lignes 47-64; figure 1 * | | |
| | -- | | |
| A | GB - A - 1 071 656 (M. MACHACEK et al.) | 1-3 | |
| | * Page 1, ligne 68 - page 2, ligne 39; figure 1 * | | |
| | ---- | | |